# EUROPÄISCHE PATENTSCHRIFT

(11) **EP 1 728 417 B1**
(45) Veröffentlichungstag und Bekanntmachung des Hinweises auf die Patenterteilung: **17.07.2013**
(21) Anmeldenummer: 06005444.2
(22) Anmeldetag: 17.03.2006
(51) Int. Cl.: A01G 13/02

(54) **Regen- oder Hagelschutzvorrichtung für Pflanzenkulturen**
Rain or hail protection device for crops
Dispositif de protection des cultures contre la pluie ou la grêle

(30) Priorität: 30.05.2005 DE 102005025891; 04.11.2005 DE 102005053425
(43) Veröffentlichungstag der Anmeldung: 06.12.2006
(73) Patentinhaber: BayWa Aktiengesellschaft, 81925 München (DE)
(72) Erfinder: Holzwarth, Rudolf, 88255 Baindt (DE)
(74) Vertreter: Pfiz, Thomas

(56) Entgegenhaltungen:
- DE-A1- 10 349 243
- DE-U1-202004 020 201
- FR-A- 2 214 398
- FR-A- 2 852 784

## Beschreibung

Die Erfindung betrifft eine Regen- oder Hagelschutzvorrichtung für Pflanzenkulturen mit mindestens zwei Reihen von Stützen, mindestens zwei Firstseilen, die jeweils die Stützen einer Reihe in der Nähe ihrer oberen Enden verbinden, sowie mindestens zwei Bahnen aus Folien- oder Netzmaterial, deren einer Längsseitenrand jeweils von einem der Firstseile gehalten wird und deren anderer Längsseitenrand jeweils einen Traufrand bildet.

In Sonderkulturen im Obstbau, wie beispielsweise in Kirsch- oder Himbeerkulturen, ist es bekannt, Regenschutzvorrichtungen in Form von Folien einzusetzen, die über die Pflanzen gespannt werden, um die reifen Früchte vor Regen zu schützen, da dieser bei Süßkirschen zu einem Aufplatzen der Früchte führen und bei Himbeeren die Anfälligkeit für Krankheiten erhöhen kann. Mit Hilfe der Folien ist es somit möglich, ohne die Gefahr eines durch Regenfall bedingten Qualitätsverlustes den optimalen Reifezeitpunkt der Früchte abzuwarten, was eine effektivere Vermarktung derselben gestattet. Wenn an Stelle der Folien Netze verwendet werden, können gegen Regen unempfindliche Obstkulturen oder Reben in ähnlicher Weise vor Hagel geschützt werden, wobei die Netze ein Auftreffen von Hagelkörnern auf die Pflanzen oder Früchte verhindern.

Die Regenschutzfolien oder Hagelnetze werden zumeist in Form von Bahnen eingesetzt, die über den in Reihe gepflanzten Bäumen, Sträuchern, Stauden oder Reben dachartig aufgespannt werden. Dabei werden die Netz-oder Folienbahnen zumeist entlang von einem ihrer Längsseitenränder an einem Firstseil befestigt, das oberhalb von jeder Pflanzreihe über die Reihe von Stützen gespannt worden ist, und erstrecken sich jeweils von den Firstseilen aus schräg nach unten in Richtung einer zwischen benachbarten Pflanzreihen angeordneten Fahrgasse, um den Hagel oder Regen über ihren anderen, tiefer liegenden und als Traufrand dienenden Längsseitenrand in die Fahrgasse abzuleiten.

In der DE 20 2004 020 201 U1 ist eine solche Regen- oder Hagelschutzvorrichtung der eingangs genannten Art offenbart, bei der die Traufränder benachbarter Bahnen jeweils in der Mitte zwischen zwei Pflanzreihen über der Fahrgasse zusammenstoßen und dort in einer nicht näher dargestellten Weise miteinander verbunden sind.

Um insbesondere bei Regenschutzfolien ein Flattern der Bahnen über den Fahrgassen zu verhindern, sind die Traufränder der Bahnen in der Regel an sogenannten Traufseilen befestigt, die sich in einer geringeren Höhe als die Firstseile und parallel zu diesen durch die Fahrgassen erstrecken und gewöhnlich mit Spannbändern zu den Stützen hin abgespannt sind. Dabei werden zumeist relativ steile Dachwinkel gewählt, um für einen guten Ablauf des Regenwassers zu sorgen, was jedoch den Nachteil hat, dass die schrägen Bahnen relativ große Windangriffsflächen bieten. Dadurch kann es insbesondere infolge von turbulenten Luftströmungen unterhalb und oberhalb der Folienbahnen zu einem heftigen Ausschlagen der Folien kommen, wodurch diese stark beansprucht werden.

Während bei der aus der DE 20 2004 020 201 U1 bekannten Regen- oder Hagelschutzvorrichtung die Firstseile durch schlauchartige Aufnahmen der Netz- oder Folienbahnen verlaufen, werden bei den meisten anderen bekannten Regen- oder Hagelschutzvorrichtung Karabinerhaken eingesetzt, um die Längsseitenränder der Bahnen mit den First- bzw. Traufseilen zu verbinden. Dabei finden gewöhnlich federbelastete Karabinerhaken Verwendung, die vorab in Ösen an den Längsseitenrändern der Bahnen befestigt werden und sich zum Transport der Bahnen problemlos zusammen mit diesen aufwickeln lassen, um sie im Zuge ihrer Anbringung über den Pflanzreihen in eines der zuvor gespannten Firstseile oder Traufseile einzuhängen. Während jedoch das Einhängen der Karabinerhaken verhältnismäßig schnell und einfach geht, ist das Aushängen der Karabinerhaken zum Abnehmen der Bahnen nach ihrem Gebrauch relativ unergonomisch und kraftaufwändig, weil zumindest die am Firstseil eingehängten Karabinerhaken durch das Gewicht der Netz- oder Folienbahnen belastet sind und die zum Aushängen der Karabinerhaken erforderliche Kraft umso größer wird, je flacher der Neigungswinkel der Netz- oder Folienbahnen ist.

Ausgehend hiervon liegt der Erfindung die Aufgabe zugrunde, eine Regen-oder Hagelschutzvorrichtung für Pflanzenkulturen der eingangs genannten Art dahingehend zu verbessern, dass sich zum einen die Windanfälligkeit der Bahnen ohne eine wesentliche Beeinträchtigung des Ablaufs von Regenwasser oder Hagel verringern und damit ihre Lebensdauer verlängern lässt, und dass zum anderen die Bewirtschaftung der Regen- und Hagelschutzvorrichtung erleichtert wird.

Zur Lösung dieser Aufgabe wird zum einen die im Patentanspruch 1 angegebene Merkmalskombination und zum anderen die im Patentanspruch 14 angegebene Merkmalskombination vorgeschlagen. Vorteilhafte Ausgestaltungen und Weiterbildungen der Erfindung ergeben sich aus den abhängigen Ansprüchen.

Durch die Merkmalskombination des Patentanspruchs 1 wird es zum einen ermöglicht, die Netz- oder Folienbahnen zur Verringerung ihrer Windanfälligkeit flach aufzuspannen, ohne dass der Ablauf von Hagel oder Regen über den Traufrand behindert wird. Zum anderen kann die lichte Höhe der Fahrgasse vergrößert und durch das Fehlen von Traufseilen der Arbeitsraum in der Fahrgasse besser freigehalten werden.

Weiter ermöglicht es diese Merkmalskombination ohne Beeinträchtigung des Ablaufs von Hagel oder Regen, die Breite der Netz- oder Folienbahnen über den halben Abstand der Pflanzreihen hinaus zu vergrößern, so dass sich die Traufränder benachbarter Netz- oder Folienbahnen oberhalb von der Mitte der Fahrgasse überlappen können, wodurch sich dort ein Eindringen von Vögeln in die Kulturen sicher verhindern lässt. Alternativ ist es in Gebieten ohne eine Vogelproblematik jedoch auch möglich, durch einen Abstand zwischen benachbarten Traufrändern über einer Fahrgasse nicht nur den über diese Traufränder ablaufenden Regen oder Hagel besser über die Breite der Fahrgasse zu verteilen, sondern durch Einsatz von schmaleren Netz- oder Folienbahnen auch Kosten zu sparen. Umgekehrt kann dort, wo das Maß der Überlappung der Traufränder benachbarter Bahnen bzw. deren Abstand nicht von Bedeutung sind, dieselbe Regen- oder Hagelschutzvorrichtung für Kulturen mit unterschiedlichem Pflanzreihenabstand verwendet werden.

Um für einen optimalen Ablauf von Hagel oder Regen über die Traufränder zu sorgen, wird die Länge der langgestreckten Verbinder zwischen den Traufrändern und den Firstseilen gemäß einer bevorzugten Ausgestaltung der Erfindung so auf die Breite der Netz- oder Folienbahnen, das gewünschte Maß der Überlappung der Traufränder bzw. deren gegenseitigen Abstand sowie auf den Abstand der Pflanzreihen abgestimmt, dass die Netz- oder Folienbahnen zwischen den als Aufhängung dienenden benachbarten Firstseilen etwas durchhängen, wobei ihre Oberflächen von den Firstseilen bis zu den Traufrändern unter einem flachen Winkel schräg nach unten geneigt sind.

Die Verbinder können in diesem Fall von biegeschlaffen Seilen, Schnüren oder Bändern gebildet werden, die lösbar oder fest mit den Bahnen verbunden sein können. Im zuerst genannten Fall können die Seile, Schnüre oder Bänder zweckmäßig entweder in vorgefertigten Ösen an den Rändern der Bahnen festgebunden oder mit Befestigungselementen in Form von Haken oder bevorzugt Karabinerhaken in derartige Ösen eingehängt werden, während im zuletzt genannten Fall die Seile, Schnüre oder Bänder mit einem Rand der Bahnen vernäht oder als einstückig über die Bahnen überstehende und aus demselben Material wie diese bestehende Verlängerungen ausgebildet sein können.

Jedoch können die Netz- oder Folienbahnen auch nahezu horizontal aufgespannt werden, wenn die verwendeten Verbinder gemäß einer vorteilhaften Ausgestaltung der Erfindung elastisch dehnbar sind, so dass sie die unbelasteten Netz- oder Folienbahnen im Wesentlichen flach gespannt halten, sich jedoch im Falle einer Belastung der Netz- oder Folienbahnen durch Hagel oder Regenwasser dehnen, wobei sich die Traufränder von selbst absenken und ein Ablaufen des Hagels oder Regenwassers ermöglichen. Insbesondere in diesem Fall werden die Verbinder vorzugsweise von gummielastischen Litzen oder Seilen gebildet, die ähnlich wie Expandergummis an ihren Enden mit hakenförmigen Befestigungselementen oder besser mit Karabinerhaken versehen sind, um ein Aushängen zu verhindern.

Die Merkmalskombination des Patentanspruchs 14 gestattet es ebenfalls, die Netz- oder Folienbahnen zur Verringerung ihrer Windanfälligkeit unter einem sehr flachen Winkel aufzuspannen, da die Befestigungselemente nicht mehr einzeln aus den Firstseilen ausgehängt werden müssen und somit die aufgespannten Netz- oder Folienbahnen einen flacheren Neigungswinkel aufweisen und sogar unter einer leichten Zugspannung stehen können.

Die im Wesentlichen ohne Fixierung durch Durchführungen an oder in den Stützen sowie durch Augen von Befestigungselementen hindurch verlaufenden, das heißt allenfalls bei großer Länge an einer oder zwei Stützen fixierten Firstseile erlauben es, zum Abnehmen der Netz- oder Folienbahnen die Verankerungen an einem Ende der Firstseile, und ggf. die Fixierung an der einen oder den wenigen weiteren Stellen, zu lösen und die Firstseile dann durch die Durchführungen der Stützen und durch die Augen der Befestigungselemente hindurchzuziehen, zum Beispiel indem man sie mit ihrem anderen Ende voran auf Trommeln aufwickelt, während die Netz- oder Folienbahnen am entgegengesetzten Ende festgehalten werden. Dabei fallen die Netz- oder Folienbahnen entlang der Pflanzreihen nach unten in die Fahrgassen zwischen benachbarten Pflanzreihen und können dort zum Abtransport aufgerollt werden.

Die Befestigungselemente werden bevorzugt von Karabinerhaken gebildet, die jeweils eine von einer Reihe von Ösen in dem zu einem Firstseil benachbarten Längsseitenrand jeder Bahn durchsetzen bzw. an den vom Traufrand entfernten Enden jedes Verbinders angebracht sind, sich bei der Anbringung der Netz- oder Folienbahnen schnell und einfach in die Firstseile einhängen lassen und ein leichtes Herausziehen der Firstseile gestatten.

Um für eine gegenseitige Verspannung der Stützen zu sorgen, die auch nach dem Herausziehen der Firstseile aufrechterhalten bleibt, sind die Stützen vorzugsweise in der Nähe ihres oberen Endes durch Spannseile verbunden, die fest mit den Stützen verbunden sind, parallel zu den Firstseilen verlaufen und zweckmäßig oberhalb derselben angeordnet sind.

Die Länge der Netz- oder Folienbahnen ist vorzugsweise so gewählt, dass sich diese an den Enden der Pflanzreihen über die äußersten Stützen hinaus erstrecken, so dass sie sich dort befestigen lassen. Dazu werden die Bahnen dort zweckmäßig entweder um ein First- oder Spannseil herum eingeschlagen oder an Bodenankern befestigt, an denen die entgegengesetzten Enden der First- und/oder Spannseile jenseits der äußersten Stützen verankert sind.

Das Herausziehen der Firstseile aus den Durchführungen der Stützen sowie aus den Augen der Befestigungselemente ist auch dann möglich, wenn der Traufrand jeder Netz- oder Folienbahn statt mit einem benachbarten Firstseil durch langgestreckte gummielastische Verbinder mit dem Traufrand einer benachbarten Folienbahn verbunden ist, wobei die zu den Traufrändern entgegengesetzten Ränder der beiden Netz- oder Folienbahnen mit Hilfe der Befestigungselemente an jeweils einem Firstseil befestigt sind. In diesem Fall werden die beiden Netz- oder Folienbahnen zweckmäßig am Ende der Nutzungsperiode entlang ihrer Traufränder nicht voneinander getrennt, sondern durch Herausziehen beider Firstseile gemeinsam von den Stützen abgenommen.

Um einerseits einen guten Ablauf von Regen oder Hagel über die Traufränder zu ermöglichen, andererseits jedoch ein Eindringen von Vögeln durch eine für den Ablauf von Regen oder Hagel erforderliche Lücke zwischen den benachbarten Traufrändern zu verhindern, ist vorzugsweise am Traufrand jeder Folienbahn ein Netz befestigt, das mit dem entsprechenden Netz am Traufrand der benachbarten Folienbahn verbunden ist, wobei die Verbindung zweckmäßig unter starker Belastung, zum Beispiel durch Hagel, lösbar ist, so dass der Hagel durch die entstehende Lücke in die Fahrgasse fallen kann.

Die Breite der Netze ist vorzugsweise so gewählt, dass diese bei Belastung von den Traufrändern aus unter einem steilen Winkel nach unten hängen und die gummielastischen Verbinder zwischen den Traufrändern nicht übermäßig gedehnt werden. Die herabhängenden Netze haben den Vorteil, dass sie bei Wind wie ein Windsack nachgeben können und somit die Regen-oder Hagelschutzvorrichtung dem Wind keine größere Angriffsfläche bietet.

Im Folgenden wird die Erfindung anhand eines in der Zeichnung dargestellten Ausführungsbeispiels näher erläutert. Es zeigen:
- Fig. 1: eine schematische perspektivische Ansicht einer erfindungsgemäßen Regenschutzvorrichtung;
- Fig. 2: eine Draufsicht auf einen Abschnitt einer Folienbahn der Regenschutzvorrichtung;
- Fig. 3: eine perspektivische Oberseitenansicht von zwei Folienbahnabschnitten gemäß Fig. 2 nach ihrer Befestigung an zwei Firstseilen;
- Fig. 4: eine Schnittansicht durch einen Teil der Regenschutzvorrichtung bei Betrachtung in Richtung der Pflanzreihen;
- Fig. 5 und 6: Ansichten von zwei als Befestigungselemente dienenden Karabinerhaken;
- Fig. 7: eine schematische perspektivische Ansicht einer erfindungsgemäßen Regen- und Hagelschutzvorrichtung.

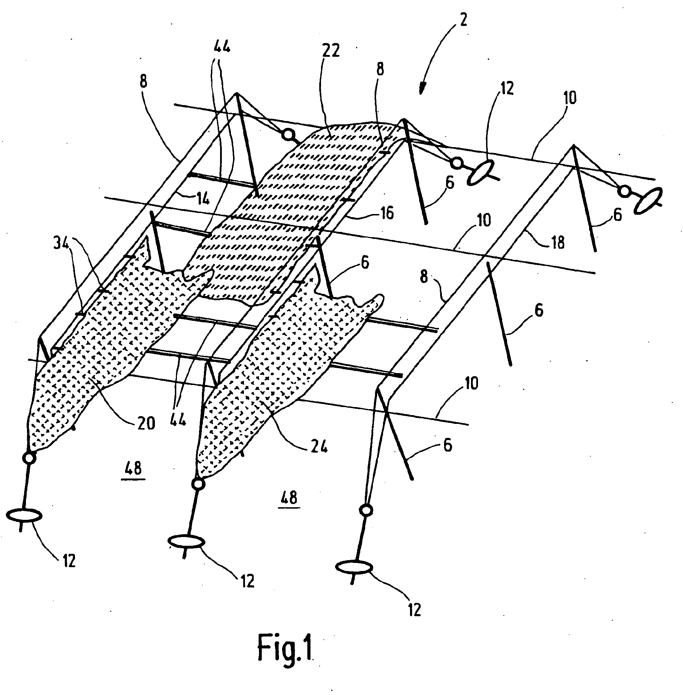

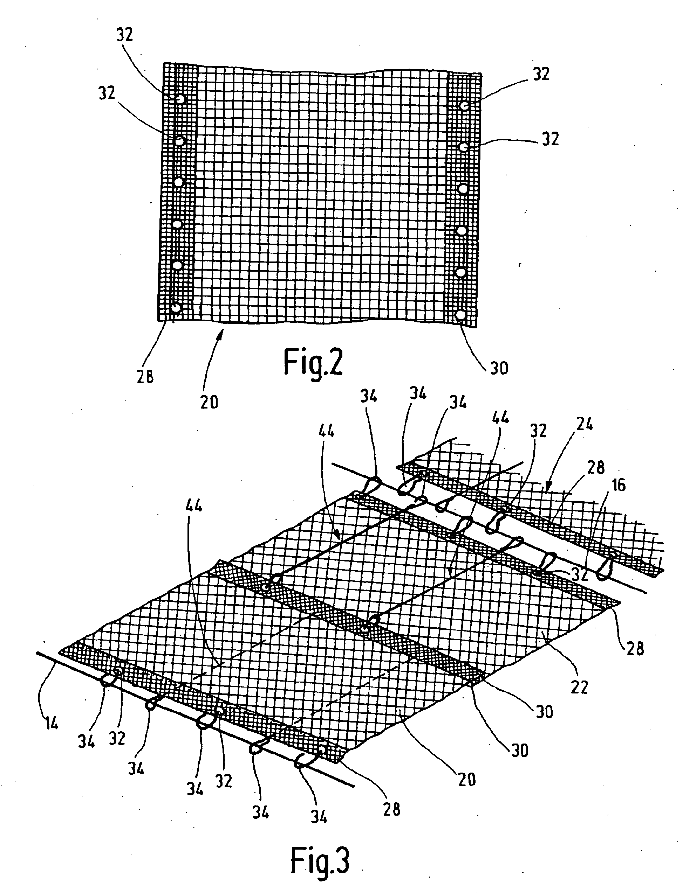

Die in Figuren 1 bis 4 dargestellte Regenschutzanlage 2 für eine Kirschbaumkultur mit parallelen Baumreihen 4 (Fig. 2) umfasst eine Mehrzahl von vertikalen Stützen 6, die innerhalb jeder Baumreihe 4 im Abstand voneinander im Boden verankert sind und senkrecht nach oben ragen, so dass ihre oberen Enden ein regelmäßiges Punktmuster bilden. Die Stützen 6 sind durch zwei Scharen von Spannseilen 8, 10 verbunden, die parallel bzw. quer zu den Baumreihen 4 verlaufen. Die Spannseile 8, 10 sind jeweils an ihren entgegengesetzten Enden mit Bodenankern 12 im Boden verankert und sind an ihren Kreuzungspunkten über den oberen Enden der Stützen 6 fest mit diesen verbunden, wobei sie ebenso wie die Stützen 6 über die gesamte Nutzungsdauer der Anlage 2 an ihrem Platz bleiben.

Die Regenschutzanlage 2 umfasst weiter eine Mehrzahl von gespannten Firstseilen 14, 16, 18, die jeweils im Abstand unterhalb der zu den Baumreihen 4 parallelen Spannseile 8 durch Durchführungen an oder in den Stützen 6 hindurchgeführt und jenseits der Enden der Baumreihen 4 an den zur Verankerung der Spannseile 8 dienenden Bodenankern 12 befestigt sind.

Die Anlage 2 umfasst außerdem eine Mehrzahl von Folienbahnen 20, 22, 24, 26, die kurz vor der Reife der Kirschen über der Kirschbaumkultur aufgespannt werden, um ein Aufplatzen der reifen Kirschen infolge von Regen und das Einfallen von Vögeln in die Kirschbaumkultur zu verhindern. Die Folienbahnen 20, 22, 24, 26 werden nach der Ernte der Kirschen zusammen mit den Firstseilen 14, 16, 18 abgenommen, um sie ggf. nach einer Reinigung und Trocknung in zusammengerolltem Zustand bis zum nächsten Gebrauch einzulagern.

Wie am besten in Fig. 2 an einem Abschnitt von einer der Folienbahnen 20 dargestellt, weisen die Bahnen 20, 22, 24, 26 verstärkte entgegengesetzte Längsseitenränder 28, 30 auf, die durch Umlegen und Vernähen oder Verkleben von Randstreifen gebildet worden sind. In die beiden verstärkten Ränder 28, 30 jeder Bahn 20, 22, 24, 26 sind in der Nähe ihrer Kanten Reihen von metallische Ösen 32 eingesetzt.

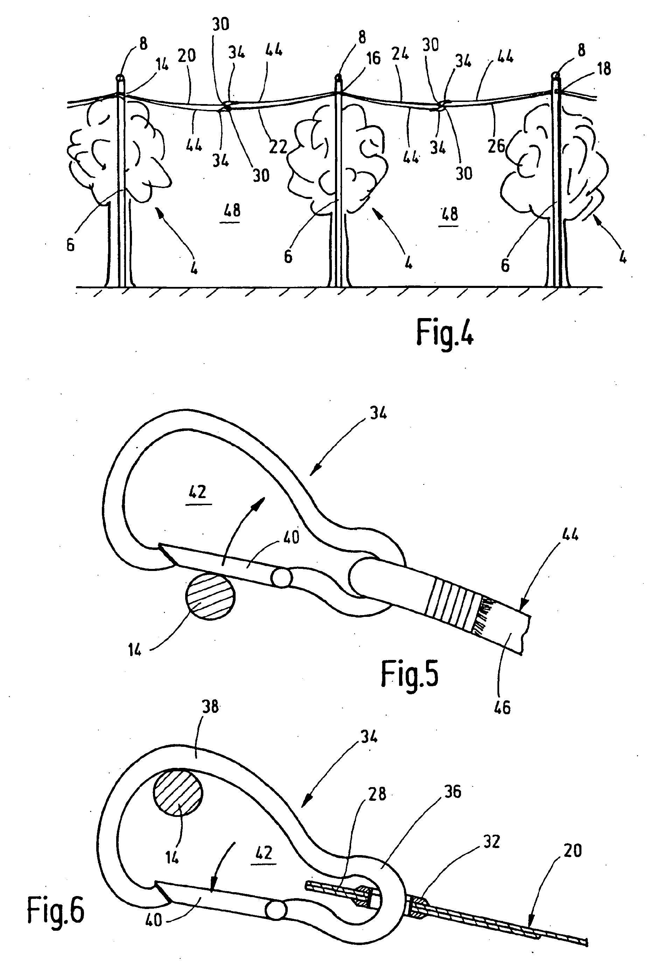

Eine der beiden Reihen von Ösen 32 dient zur Befestigung von Karabinerhaken 34, wie in Fig. 6 dargestellt, die jeweils vor der Anbringung der Folienbahnen 20, 22, 24, 26 über den Baumreihen 4 mit ihrem schmaleren U-förmig gebogenen Unterteil 36 in einer der Ösen 32 befestigt werden, so dass bei der Anbringung der Folienbahnen 20, 22, 24, 26 ihr nach außen über den benachbarten Längsseitenrand 28 derselben überstehender breiterer Oberteil 38 direkt an einem der Firstseile 14, 16, 18 eingehängt werden kann, indem man eine federbelastete Zunge 40 des Karabinerhakens 34 gegen das Firstseil 14, 16, 18 drückt, worauf sich dieses an der sich öffnenden Zunge 40 vorbei ins Auge 42 des Karabinerhakens 34 bewegt, wo es nach dem Schließen der Zunge 40 festgehalten wird, wie in Fig. 5 und 6 durch Pfeile angedeutet.

Die andere der beiden Reihen von Ösen 32 dient zur Befestigung von längeren Verbindern 44 in Form von dehnbaren mit Gewebe umwirkten Gummiseilen 46, deren Ausbildung im Wesentlichen derjenigen von dünnen Expanderseilen entspricht. Die Gummiseile 46 sind jedoch an ihren beiden Enden statt mit steifen Drahthaken ebenfalls mit Karabinerhaken 34 versehen, wie in Fig. 5 an einem Ende beispielhaft dargestellt, von denen einer in eine der Ösen 32 und der andere an einem Firstseil 14, 16, 18 über einer Baumreihe 4 eingehängt wird.

Wie am besten in Fig. 1, 3 und 4 dargestellt und am Beispiel der mittleren Baumreihe 4 erläutert, erstrecken sich jeweils zwei Folienbahnen 22, 24 beiderseits des Firstseils 16 dieser Baumreihe 4. Jede der beiden Bahnen 22, 24 erstreckt sich quer zu ihrer Längsrichtung vom Firstseil 16 aus bis etwa in die Mitte einer Fahrgasse 48 zwischen den benachbarten Baumreihen 4, wo ihr als Traufrand zum Ableiten von Regenwasser von der Folienoberseite dienender Längsseitenrand 30 den als Traufrand dienenden Längsseitenrand 30 einer über einer benachbarten Baumreihe 4 aufgespannten Folienbahn 20 bzw. 26 überlappt. Jede der Folienbahnen 22, 24 wird am Firstseil 16 sowie an einem benachbarten Firstseil 14 bzw. 18 (in Fig. 3 nicht dargestellt) befestigt, wobei die in den Ösen 32 der Längsseitenränder 28 befestigten Karabinerhaken 34 am Firstseil 16 eingehängt werden, während die Karabinerhaken 34 an den Enden der an den entgegengesetzten Längsseitenränder 30 befestigten Verbinder 44 am benachbarten Firstseil 14 bzw. 18 eingehängt werden.

Anders gesagt wird nach der Anbringung einer ersten Folienbahn 20 bzw. 24 über einer Seite einer Fahrgasse 48 eine zweite Folienbahn 22 bzw. 26 über der anderen Seite der Fahrgasse 48 angebracht, wobei sie an den gleichen Firstseilen 14, 16 bzw. 16, 18 wie die erste Folienbahn 20 bzw. 24 aufgehängt wird. Die Aufhängung der zweiten Folienbahn 22 bzw. 26 erfolgt jedoch mit umgekehrter Ausrichtung, so dass sie sich unterhalb der Verbinder 44 der ersten Folienbahn 20 bzw. 24 bis etwa zur Mitte der Fahrgasse 48 erstreckt und sich ihre eigenen Verbinder 44 unterhalb der zuerst angebrachten Folienbahn 20 bzw. 24 bis zum benachbarten Firstseil 14 bzw. 16 erstrecken, wie in Fig. 4 dargestellt.

Die Länge der Verbinder 44 ist so auf die Breite der Folienbahnen 20, 22, 24, 26 und den Abstand benachbarter Baumreihen 4 abgestimmt, dass die Folienbahnen 20, 22, 24, 26 in der Mitte der Fahrgasse 48 im Bereich ihrer Überlappung geringfügig tiefer als die Firstseile 14, 16, 18 liegen, mit anderen Worten einen kleinen Durchhang besitzen. Durch die flache Ausrichtung kann die Windanfälligkeit der Folienbahnen 20, 22, 24, 26 beträchtlich verringert werden, ohne dass eine zufriedenstellende Ableitung von Regenwasser von der Oberseite der Folienbahnen 20, 22, 24, 26 über die Traufränder 30 zum Boden der Fahrgasse 48 beeinträchtigt wird. Dazu trägt auch die elastische Dehnbarkeit der Verbinder 44 bei, die einerseits eine Abfederung windbedingter Belastungen in den Folienbahnen 20, 22, 24, 26 und andererseits ein gewichtsbedingte Absenken der Traufränder 30 infolge von Regenwasseransammlungen auf den Oberseiten der Folienbahnen 20, 22, 24, 26 ermöglicht, so dass ein schnelles und sicheres Ablaufen des Regenwassers gewährleistet wird.

An den entgegengesetzten Enden jeder Fahrgasse 48 werden die Folienbahnen 20, 22, 24, 26 zusammengerafft, um die schräg nach unten zu den Bodenankern 12 verlaufenden Spannseile 8 herum eingeschlagen und an den Bodenankern 12 befestigt, so dass zum Beispiel zur Ernte der Kirschen eine freie Zufahrt in die Fahrgassen 48 gewährleistet ist.

Nach der Ernte der Kirschen werden die Folienbahnen 20, 22, 24, 26 abgenommen, indem man jedes der Firstseile 14, 16, 18 zuerst an einem Ende löst und dann mit dem anderen Ende voran auf eine Trommel (nicht dargestellt) aufwickelt. Dabei werden die Firstseile 14, 16, 18 durch die Durchführungen der Stützen 6 und durch die Augen 42 der Karabinerhaken 34 hindurchgezogen, so dass die Folienbahnen 20, 22, 24, 26 nach dem Entfernen der jeweiligen Firstseile 14, 16, 18 an ihren beiden Seiten nach unten in die Fahrgasse 48 fallen, wo sie zusammen mit den Karabinerhaken 34 und den Verbindern 44 zum Abtransport und zur Einlagerung problemlos aufgewickelt werden können.

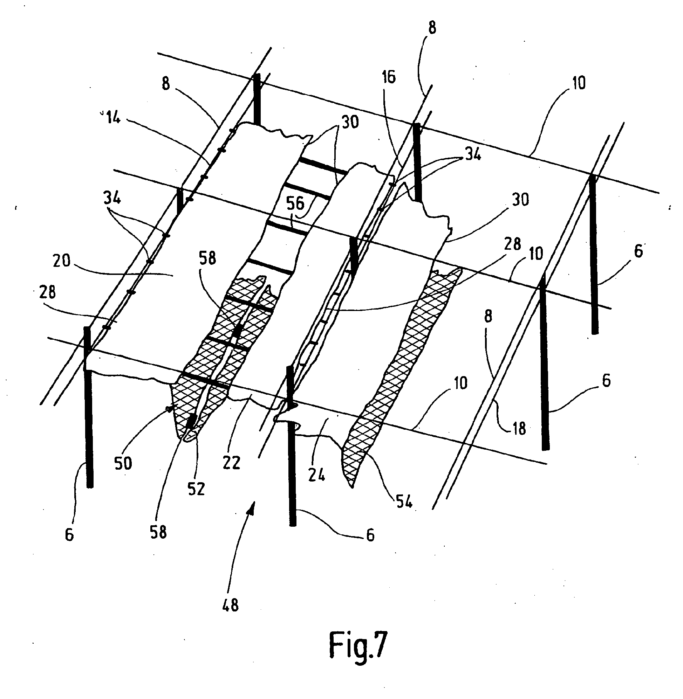

Eine entsprechende Vorgehensweise ist auch bei der in Fig. 7 dargestellten Regen- und Hagelschutzanlage 2 möglich, die sich von der zuvor beschriebenen Regenschutzanlage 2 dadurch unterscheidet, dass zum einen der Traufrand 30 jeder Folienbahn 20, 22, 24 statt mit einem benachbarten Firstseil 14, 16 mit dem Traufrand 30 einer benachbarten Folienbahn 22, 20 verbunden ist, so dass sich die Traufränder 30 nicht mehr überlappen, und dass zum anderen zumindest in Gebieten mit Vogelproblematik zwischen den im Abstand von 50 bis 70 cm angeordneten Traufrändern 30 der Folienbahnen Netze 50, 52, 54 angeordnet sind, um einen Einflug von Vögeln durch die Lücke zwischen zwei gegenüberliegenden Traufrändern 30 zu verhindern.

Die zu den Traufrändern 30 entgegengesetzten Ränder 28 der Folienbahnen 20, 22 sind auch hier durch Karabinerhaken 34 an den Firstseilen 14, 16 eingehängt, die durch die Augen 42 der Karabinerhaken 34 verlaufen, wie in Fig. 6 dargestellt.

Zum Verbinden der gegenüberliegenden Traufränder 30, 30 der Folienbahnen 20, 22 dienen langgestreckte Verbinder 56, die in regelmäßigen Abständen von 90 bis 120 cm angeordnet sind und deren Ausbildung derjenigen der zuvor beschriebenen Verbinder 44 entspricht, wobei ihre Länge so gewählt wird, dass die Folienbahnen 20, 24 nahezu horizontal ausgerichtet sind und quer zu den Baumreihen 4 unter leichter Zugspannung stehen, so dass sie nur eine geringe Windangriffsfläche bieten.

Die Netze 50, 52, 54 sind jeweils in einem gewissen Abstand vom Traufrand 30 jenseits der Ösen 32 an den Folienbahnen 20, 22 bzw. 24 festgenäht und in der Mitte zwischen den Traufrändern 30, 30 durch Kunststoffclips 58 verbunden, die sich bei starker Belastung der Netze 50, 52, 54 durch Hagel öffnen, so dass der Hagel zwischen den Netzen 50, 52 nach unten fallen kann. Die Netze 50, 52, 54 weisen eine solche Breite auf, dass sie bei Belastung steil nach unten hängen und die Verbinder 56 nicht zu stark gedehnt werden.

Am Ende der Nutzungsperiode werden jeweils die Firstseile 14, 16 über zwei benachbarten Baumreihen 4 gemeinsam aus den Durchführungen der Stützen 6 und aus den Augen 42 der Karabinerhaken 34 herausgezogen, so dass die Folienbahnen 20 und 22 als Einheit mit den Verbindern 56 und den Netzen 50, 52, das heißt ohne ein vorheriges Lösen der Verbinder 56 und der Kunststoffclips 58, in die Fahrgasse 48 zwischen den Baumreihen 4 fallen und gemeinsam aufgerollt oder aufgewickelt werden können.

## Patentansprüche

1. Regen- oder Hagelschutzvorrichtung (2) für Pflanzenkulturen mit mindestens zwei Reihen von Stützen (6), mindestens zwei Firstseilen (14, 16, 18) die jeweils die Stützen (6) einer Reihe in der Nähe ihrer oberen Enden verbinden, sowie mindestens zwei Bahnen (20, 22, 24, 26) aus Folien- oder Netzmaterial, deren einer Längsseitenrand (28) jeweils von einem der Firstseile (14, 16, 18) gehalten wird und deren anderer Längsseitenrand jeweils einen Traufrand (30) bildet, **dadurch gekennzeichnet, dass** der Traufrand (30) durch langgestreckte Verbinder (44) mit einem benachbarten Firstseil (14, 16, 18) verbunden ist, zu dem sich die Verbinder (44) über eine benachbarte Bahn (20, 22, 24, 26) hinweg oder unter einer benachbarten Bahn (20, 22, 24, 26) hindurch erstrecken.

2. Regen- oder Hagelschutzvorrichtung nach Anspruch 1, **dadurch gekennzeichnet, dass** die Bahnen (20, 22, 24, 26) unter einem flachen Winkel schräg nach unten in Richtung ihres Traufrandes (30) geneigt sind.

3. Regen- oder Hagelschutzvorrichtung nach Anspruch 1 oder 2, **dadurch gekennzeichnet, dass** die Verbinder (44) elastisch dehnbar sind.

4. Regen- oder Hagelschutzvorrichtung nach einem der vorangehenden Ansprüche, **dadurch gekennzeichnet, dass** die Verbinder (44) jeweils ein Seil (46) oder Band umfassen.

5. Regen- oder Hagelschutzvorrichtung nach einem der vorangehenden Ansprüche, **dadurch gekennzeichnet, dass** die Verbinder und die Bahnen (20, 22, 24, 26) aus demselben Material bestehen.

6. Regen- oder Hagelschutzvorrichtung nach einem der vorangehenden Ansprüche, **dadurch gekennzeichnet, dass** die Verbinder einstückig mit den Bahnen (20, 22, 24, 26) verbunden sind.

7. Regen- oder Hagelschutzvorrichtung nach einem der Ansprüche 1 bis 5, **dadurch gekennzeichnet, dass** die Verbinder mit den Bahnen (20, 22, 24, 26) vernäht sind.

8. Regen- oder Hagelschutzvorrichtung nach einem der Ansprüche 1 bis 5, **dadurch gekennzeichnet, dass** die Verbinder (44) lösbar an den Bahnen (20, 22, 24, 26) befestigt sind.

9. Regen- oder Hagelschutzvorrichtung nach Anspruch 8, **dadurch gekennzeichnet, dass** die Verbinder (44) ein Befestigungselement (34) zur lösbaren Befestigung am Traufrand (30) der Bahnen (20, 22, 24, 26) tragen.

10. Regen- oder Hagelschutzvorrichtung nach einem der vorangehenden Ansprüche, **dadurch gekennzeichnet, dass** die Verbinder (44) ein Befestigungselement (34) zur lösbaren Befestigung an einem der Firstseile (14, 16, 18) tragen.

11. Regen- oder Hagelschutzvorrichtung nach Anspruch 9 oder 10, **dadurch gekennzeichnet, dass** das Befestigungselement ein Karabinerhaken (34) ist.

12. Regen- oder Hagelschutzvorrichtung nach einem der vorangehenden Ansprüche, **dadurch gekennzeichnet, dass** sich die Träufränder (30) benachbarter Bahnen (20, 22; 24, 26) überlappen.

13. Regen- oder Hagelschutzvorrichtung nach einem der Ansprüche 1 bis 11, **dadurch gekennzeichnet, dass** die Traufränder (30) benachbarter Bahnen im Abstand voneinander angeordnet sind.

14. Regen- oder Hagelschutzvorrichtung nach einem der Ansprüche 1 bis 13, **dadurch gekennzeichnet, dass** die Firstseile (14, 16, 18) im Wesentlichen ohne Fixierung durch Durchführungen an oder in den Stützen (6) sowie ohne Fixierung durch Augen (42) von Befestigungselementen (34) zur Befestigung der Bahnen (20, 22, 24, 26) an benachbarten Firstseilen (14, 16, 18) verlaufen.

15. Regen- oder Hagelschutzvorrichtung nach Anspruch 14, **dadurch gekennzeichnet, dass** sich die Bahnen (20, 22, 24, 26) durch Herausziehen der Firstseile (14, 16, 18) aus den Durchführungen an oder in den Stützen (6) sowie aus den Augen (42) der Befestigungselemente (34) abnehmen lassen.

16. Regen- oder Hagelschutzvorrichtung nach Anspruch 15, **dadurch gekennzeichnet, dass** sich zwei benachbarte und im Bereich ihrer Traufränder (30) miteinander verbundene Bahnen (20, 22) durch Herausziehen der Firstseile (14, 16) aus den Durchführungen an oder in den Stützen (6) sowie aus den Augen (42) der Befestigungselemente (34) gemeinsam abnehmen lassen.

17. Regen- oder Hagelschützvorrichtung nach einem der vorangehenden Ansprüche, **dadurch gekennzeichnet, dass** die Stützen (6) in der Nähe ihres oberen Endes durch Spannseile (8, 10) verbunden sind, wobei zumindest ein Teil (8) der Spannseile (8, 10) parallel zu den Firstseilen (14, 16, 18) verläuft.

18. Regen- oder Hagelschutzvorrichtung nach Anspruch 17, **dadurch gekennzeichnet, dass** die Spannseile (8, 10) oberhalb der Firstseile (14, 16, 18) angeordnet sind.

19. Regen- oder Hagelschutzvorrichtung nach Anspruch 17 oder 18, **dadurch gekennzeichnet, dass** die Spannseile (8, 10) fest mit den Stützen (6) verbunden sind.

20. Regen- oder Hagelschutzvorrichtung nach einem der vorangehenden Ansprüche, **dadurch gekennzeichnet, dass** die Enden der Bahnen (20, 22, 24, 26) über die äußersten Stützen (6) jeder Reihe von Stützen (6) hinaus verlaufen und dort um benachbarte First- und/oder Spannseile (14, 16, 18 bzw. 8) herum eingeschlagen sind.

21. Regen- oder Hagelschutzvorrichtung nach einem der vorangehenden Ansprüche, **dadurch gekennzeichnet, dass** die Enden der Bahnen (20, 22, 24, 26) über die äußersten Stützen (6) jeder Reihe von Stützen (6) hinaus verlaufen und dort an Bodenankem (12) befestigt sind, die zur Verankerung von entgegengesetzten Enden der First- und/oder Spannseile (14, 16, 18 bzw. 8) dienen.

22. Regen- oder Hagelschutzvorrichtung nach einem der Ansprüche 14 bis 21, **dadurch gekennzeichnet, dass** der Traufrand (30) jeder Folienbahn (20, 22) durch langgestreckte Verbinder (56) mit dem Traufrand (30) einer benachbarten Folienbahn (22, 20) verbunden ist.

23. Regen- oder Hagelschutzvorrichtung nach Anspruch 22, **dadurch gekennzeichnet, dass** am Traufrand (30) jeder Folienbahn (20, 22, 24) ein Netz (52, 54, 56) befestigt ist, und dass die Netze (52, 54) an benachbarten Traufrändern (30) miteinander verbunden sind.

24. Regen- oder Hagelschutzvorrichtung nach Anspruch 23 **dadurch gekennzeichnet, dass** die Netze (52, 54) unter Belastung lösbar miteinander verbunden sind.

25. Regen- oder Hagelschutzvorrichtung nach Anspruch 23 oder 24, **dadurch gekennzeichnet, dass** die Netze (52, 54, 56) von den Traufrändern (30) aus schräg nach unten hängen.

## Claims

1. Rain or hail shield (2) for plants, having at least two rows of supports (6), having at least two ridge cables (14, 16, 18), which connect the supports (6) of a respective row in the vicinity of their upper ends, and having at least two webs (20, 22, 24, 26) which are made of sheet material or net material and of which the one longitudinal side periphery (28) is retained in each case by one of the ridge cables (14, 16, 18) and the other longitudinal side periphery forms a respective eaves periphery (30), **characterized in that** the eaves periphery (30) is connected, by elongate connectors (44), to an adjacent ridge cable (14, 16, 18), to which the connectors (44) extend over an adjacent web (20, 22, 24, 26) or under an adjacent web (20, 22, 24, 26).

2. Rain or hail shield according to Claim 1, **characterized in that** the webs (20, 22, 24, 26) are inclined obliquely downwards at a shallow angle in the direction of their eaves periphery (30).

3. Rain or hail shield according to Claim 1 or 2, **characterized in that** the connectors (44) are elastically expansible.

4. Rain or hail shield according to one of the preceding claims, **characterized in that** the connectors (44) each comprise a cable (46) or strap.

5. Rain or hail shield according to one of the preceding claims, **characterized in that** the connectors and the webs (20, 22, 24, 26) consist of the same material.

6. Rain or hail shield according to one of the preceding claims, **characterized in that** the connectors are connected to the webs (20, 22, 24, 26) in one piece.

7. Rain or hail shield according to one of Claims 1 to 5, **characterized in that** the connectors are sewn to the webs (20, 22, 24, 26).

8. Rain or hail shield according to one of Claims 1 to 5, **characterized in that** the connectors (44) are fastened in a releasable manner on the webs (20, 22, 24, 26).

9. Rain or hail shield according to Claim 8, **characterized in that** the connectors (44) bear a fastening element (34) for releasable fastening on the eaves periphery (30) of the webs (20, 22, 24, 26).

10. Rain or hail shield according to one of the preceding claims, **characterized in that** the connectors (44) bear a fastening element (34) for releasable fastening on one of the ridge cables (14, 16, 18).

11. Rain or hail shield according to Claim 9 or 10, **characterized in that** the fastening element is a carabiner hook (34).

12. Rain or hail shield according to one of the preceding claims, **characterized in that** the eaves peripheries (30) of adjacent webs (20, 22; 24, 26) overlap.

13. Rain or hail shield according to one of Claims 1 to 11, **characterized in that** the eaves peripheries (30) of adjacent webs are spaced apart from one another.

14. Rain or hail shield according to one of Claims 1 to 13, **characterized in that** the ridge cables (14, 16, 18) run, essentially without any fixing, through lead-throughs on or in the supports (6) and, without any fixing, through eyelets (42) of fastening elements (34) for fastening the webs (20, 22, 24, 26) on adjacent ridge cables (14, 16, 18).

15. Rain or hail shield according to Claim 14, **characterized in that** the webs (20, 22, 24, 26) can be removed by virtue of the ridge cables (14, 16, 18) being pulled out of the lead-throughs on or in the supports (6) and out of the eyelets (42) of the fastening elements (34).

16. Rain or hail shield according to Claim 15, **characterized in that** two adjacent webs (20, 22), connected to one another in the region of their eaves peripheries (30), can be removed together by virtue of the ridge cables (14, 16) being pulled out of the lead-throughs on or in the supports (6) and out of the eyelets (42) of the fastening elements (34).

17. Rain or hail shield according to one of the preceding claims, **characterized in that** the supports (6) are connected in the vicinity of their upper end by bracing cables (8, 10), wherein at least some (8) of the bracing cables (8, 10) run parallel to the ridge cables (14, 16, 18).

18. Rain or hail shield according to Claim 17, **characterized in that** the bracing cables (8, 10) are arranged above the ridge cables (14, 16, 18).

19. Rain or hail shield according to Claim 17 or 18, **characterized in that** the bracing cables (8, 10) are fixed to the supports (6).

20. Rain or hail shield according to one of the preceding claims, **characterized in that** the ends of the webs (20, 22, 24, 26) run beyond the outermost supports (6) of each row of supports (6) and are folded in there around adjacent ridge cables and/or bracing cables (14, 16, 18 and/or 8).

21. Rain or hail shield according to one of the preceding claims, **characterized in that** the ends of the webs (20, 22, 24, 26) run beyond the outermost supports (6) of each row of supports (6) and are fastened there on ground anchors (12), which serve for anchoring opposite ends of the ridge cables and/or bracing cables (14, 16, 18 and/or 8).

22. Rain or hail shield according to one of Claims 14 to 21, **characterized in that** the eaves periphery (30) of each sheet-material web (20, 22) is connected to the eaves periphery (30) of an adjacent sheet-material web (22, 20) by elongate connectors (56).

23. Rain or hail shield according to Claim 22, **characterized in that** a net (52, 54, 56) is fastened on the eaves periphery (30) of each sheet-material web (20, 22, 24), and **in that** the nets (52, 54) are connected to one another on adjacent eaves peripheries (30).

24. Rain or hail shield according to Claim 23, **characterized in that** the nets (52, 54) are connected to one another such that they can be released under loading.

25. Rain or hail shield according to Claim 23 or 24, **characterized in that** the nets (52, 54, 56) hang obliquely downwards from the eaves peripheries (30).

## Revendications

1. Dispositif de protection de cultures (2) contre la pluie ou la grêle, comprenant au moins deux rangées de supports (6), au moins deux câbles de faîte (14, 16, 18) qui relient chacun les supports (6) d'une rangée à proximité de ses extrémités supérieures, ainsi qu'au moins deux nappes (20, 22, 24, 26) en matériau en film ou en filet, dont un bord latéral longitudinal (28) est à chaque fois maintenu par l'un des câbles de faîte (14, 16, 18) et dont l'autre bord latéral longitudinal forme à chaque fois un bord de gouttière (30), **caractérisé en ce que** le bord de gouttière (30) est connecté par des éléments de liaison (44) étirés en longueur à un câble de faîte adjacent (14, 16, 18), vers lequel les éléments de liaison (44) s'étendent au-delà d'une nappe adjacente (20, 22, 24, 26) ou en dessous d'une nappe adjacente (20, 22, 24, 26).

2. Dispositif de protection contre la pluie ou la grêle selon la revendication 1, **caractérisé en ce que** les nappes (20, 22, 24, 26) sont inclinées suivant un angle plat obliquement vers le bas dans la direction de leur bord de gouttière (30).

3. Dispositif de protection contre la pluie ou la grêle selon la revendication 1 ou 2, **caractérisé en ce que** les éléments de liaison (44) peuvent être étirés élastiquement.

4. Dispositif de protection contre la pluie ou la grêle selon l'une quelconque des revendications précédentes, **caractérisé en ce que** les éléments de liaison (44) comprennent chacun un câble (46) ou une bande.

5. Dispositif de protection contre la pluie ou la grêle selon l'une quelconque des revendications précédentes, **caractérisé en ce que** les éléments de liaison et les nappes (20, 22, 24, 26) se composent du même matériau.

6. Dispositif de protection contre la pluie ou la grêle selon l'une quelconque des revendications précédentes, **caractérisé en ce que** les éléments de liaison sont connectés d'une seule pièce aux nappes (20, 22, 24, 26).

7. Dispositif de protection contre la pluie ou la grêle selon l'une quelconque des revendications 1 à 5, **caractérisé en ce que** les éléments de liaison sont cousus aux nappes (20, 22, 24, 26).

8. Dispositif de protection contre la pluie ou la grêle selon l'une quelconque des revendications 1 à 5, **caractérisé en ce que** les éléments de liaison (44) sont fixés de manière détachable aux nappes (20, 22, 24, 26).

9. Dispositif de protection contre la pluie ou la grêle selon la revendication 8, **caractérisé en ce que** les éléments de liaison (44) portent un élément de fixation (34) pour la fixation détachable au bord de gouttière (30) des nappes (20, 22, 24, 26).

10. Dispositif de protection contre la pluie ou la grêle selon l'une quelconque des revendications précédentes, **caractérisé en ce que** les éléments de liaison (44) portent un élément de fixation (34) pour la fixation détachable à l'un des câbles de faîte (14, 16, 18).

11. Dispositif de protection contre la pluie ou la grêle selon la revendication 9 ou 10, **caractérisé en ce que** l'élément de fixation est un mousqueton (34).

12. Dispositif de protection contre la pluie ou la grêle selon l'une quelconque des revendications précédentes, **caractérisé en ce que** les bords de gouttière (30) chevauchent des nappes adjacentes (20, 22 ; 24, 26).

13. Dispositif de protection contre la pluie ou la grêle selon l'une quelconque des revendications 1 à 11, **caractérisé en ce que** les bords de gouttière (30) de nappes adjacentes sont disposés à distance les uns des autres.

14. Dispositif de protection contre la pluie ou la grêle selon l'une quelconque des revendications 1 à 13, **caractérisé en ce que** les câbles de faîte (14, 16, 18) s'étendent essentiellement sans fixation à travers des passages contre ou dans les supports (6) et sans fixation à travers des oeillets (42) d'éléments de fixation (34) pour la fixation des nappes (20, 22, 24, 26) à des câbles de faîte adjacents (14, 16, 18).

15. Dispositif de protection contre la pluie ou la grêle selon la revendication 14, **caractérisé en ce que** les nappes (20, 22, 24, 26) peuvent être enlevées en retirant les câbles de faîte (14, 16, 18) des passages contre ou dans les supports (6) et hors des oeillets (42) des éléments de fixation (34).

16. Dispositif de protection contre la pluie ou la grêle selon la revendication 15, **caractérisé en ce que** deux nappes adjacentes (20, 22) connectées l'une à l'autre dans la région de leurs bords de gouttière (30) peuvent être enlevées ensemble en retirant les câbles de faîte (14, 16) hors des passages contre ou dans les supports (6) et hors des oeillets (42) des éléments de fixation (34).

17. Dispositif de protection contre la pluie ou la grêle selon l'une quelconque des revendications précédentes, **caractérisé en ce que** les supports (6) sont connectés à proximité de leur extrémité supérieure par des câbles de tension (8, 10), au moins une partie (8) des câbles de tension (8, 10) s'étendant parallèlement aux câbles de faîte (14, 16, 18).

18. Dispositif de protection contre la pluie ou la grêle selon la revendication 17, **caractérisé en ce que** les câbles de tension (8, 10) sont disposés au-dessus des câbles de faîte (14, 16, 18).

19. Dispositif de protection contre la pluie ou la grêle selon la revendication 17 ou 18, **caractérisé en ce que** les câbles de tension (8, 10) sont connectés fixement aux supports (6).

20. Dispositif de protection contre la pluie ou la grêle selon l'une quelconque des revendications précédentes, **caractérisé en ce que** les extrémités des nappes (20, 22, 24, 26) s'étendent au-delà des supports les plus extérieurs (6) de chaque rangée de supports (6) et sont enroulées à cet endroit autour de câbles de faîte et/ou de tension adjacents (14, 16, 18, respectivement 8).

21. Dispositif de protection contre la pluie ou la grêle selon l'une quelconque des revendications précédentes, **caractérisé en ce que** les extrémités des nappes (20, 22, 24, 26) s'étendent au-delà des supports les plus extérieurs (6) de chaque rangée de supports (6) et sont fixées à cet endroit à des ancrages au sol (12) qui servent à l'ancrage d'extrémités opposées des câbles de faîte et/ou de tension adjacents (14, 16, 18, respectivement 8).

22. Dispositif de protection contre la pluie ou la grêle selon l'une quelconque des revendications 14 à 21, **caractérisé en ce que** le bord de gouttière (30) de chaque nappe de film (20, 22) est connecté par des éléments de liaison étirés en longueur (56) au bord de gouttière (30) d'une nappe de film adjacente (22, 20).

23. Dispositif de protection contre la pluie ou la grêle selon la revendication 22, **caractérisé en ce qu'**un filet (52, 54, 56) est fixé sur le bord de gouttière (30) de chaque nappe de film (20, 22, 24) et **en ce que** les filets (52, 54) sont connectés les uns aux autres au niveau de bords de gouttière adjacents (30).

24. Dispositif de protection contre la pluie ou la grêle selon la revendication 23, **caractérisé en ce que** les filets (52, 54) sont connectés sous contrainte les uns aux autres de manière détachable.

25. Dispositif de protection contre la pluie ou la grêle selon la revendication 23 ou 24, **caractérisé en ce que** les filets (52, 54, 56) sont suspendus obliquement vers le bas depuis les bords de gouttière (30).
